# EUROPÄISCHE PATENTSCHRIFT

(11) **EP 0 738 244 B1**
(45) Veröffentlichungstag und Bekanntmachung des Hinweises auf die Patenterteilung: **08.11.2000**
(21) Anmeldenummer: 94910316.2
(22) Anmeldetag: 07.04.1994
(51) Int. Cl.: C04B 35/00

(54) **VERFAHREN ZUR HERSTELLUNG KERAMISCHER GRÜNKÖRPER DURCH DOPPELSCHICHT-KOMPRESSION**
PROCESS FOR PRODUCING CERAMIC GREEN COMPACTS BY DOUBLE LAYER COMPRESSION
PROCEDE DE FABRICATION DE COMPACTS VERTS CERAMIQUES PAR COMPRESSION A DOUBLE COUCHE

(30) Priorität: 08.04.1993 CH 109693
(43) Veröffentlichungstag der Anmeldung: 23.10.1996
(73) Patentinhaber: CeramTec AG Innovative Ceramic Engineering, 73207 Plochingen (DE)
(72) Erfinder: GRAULE, Thomas, D-8200 Schaffhausen (CH); GAUCKLER, Ludwig, J., D-8200 Schaffhausen (CH); BAADER, Felix, D-8057 Zürich (CH)
(74) Vertreter: Peege, Klaus
(86) Internationale Anmeldenummer: CH9400070
(87) Internationale Veröffentlichungsnummer: WO9424064

(56) Entgegenhaltungen:
- WO-A-93/22256
- WO-A-94/02429
- US-A- 5 188 780
- DATABASE WPI Week 9233, Derwent Publications Ltd., London, GB; AN 92-273766 & JP,A,4 187 300 (TOYO BIO CORP) 3. Juli 1992
- DATABASE WPI Week 8950, Derwent Publications Ltd., London, GB; AN 89-367367 & JP,A,1 274 831 (RIKEN VITAMIN) 2. November 1982

## Beschreibung

Die Erfindung betrifft ein Verfahren zur Herstellung keramischer Grünkörper nach dem Oberbegriff des Patentanspruches 1.

Zur Fertigung keramischer Grünkörper sind im wesentlichen fünf Formgebungsverfahren bekannt und zwar Pressen, Isopressen, Extrusion, Schlickerguss und Spritzguss. Die Wahl eines Formgebungsverfahrens richtet sich nach Gestalt, Funktion und Stückzahl des gewünschten Grünkörpers. Das Pressen und Isopressen geht von rieselfähigen, gut verpressbaren Ausgangspulvern aus. Die Extrusion, die sich vorzugsweise für achssymetrische Bauteile eignet, bedient sich eines Gemisches aus Pulvern und organischen oder anorganischen Plastifizierern. Für sehr komplex geformte Grünkörper wird das aus der Kunststofftechnologie bekannte Spritzgussverfahren verwendet. Bei diesem Verfahren wird ein Keramikpulver/Thermoplast-Gemisch verspritzt und anschliessend werden nach der Formgebung das oder die Thermoplaste aus dem Grünkörper ausgetrieben. Beim Schlickerguss wird Keramikpulver mit Wasser unter Beihilfe von Tensiden und Bindern zu einem fliessfähigen Schlicker verarbeitet und anschliessend in poröse Formen gegossen. Durch Entzug des Wassers in den porösen Formen, z.B. aus Gips oder porösen Kunststoffen, entstehen Grünkörper, die nach der Entformung getrocknet und anschliessend gesintert werden.

Der Schlickerguss wird seit langem angewendet und vorzugsweise zur Herstellung grösserer und hohler Grünkörper verwendet. Der Schlickerguss ist trotz seiner weiten Verbreitung und Anwendung mit einigen Nachteilen behaftet.

Der Aushärtemechanismus hängt vom Wasserentzug ab; lösliche Bestandteile neigen folglich zur Migration, mit dem Ergebnis ungleicher Verteilung im geformten Grünkörper.

Der Formgebungsprozess ist langsam, auch können sich Dichtegradienten im Grünkörper einstellen. Ferner ist ein nach dem bekannten Schlickergussverfahren hergestellter Grünkörper gegen mechanische Einwirkungen empfindlich und damit für eine Grünbearbeitung nur beschränkt geeignet. Auch sind die porösen Formen vor jedem Wiedereinsatz sehr sorgfältig und mit beträchtlichem Aufwand zu trocknen. Die Formen setzen der geometrischen Gestaltung von Grünkörpern Grenzen, indem z.B. Hinterschneidungen nur begrenzt möglich sind.

Aus der US-A-5 188 780 ist bekannt, keramische Grünkörper durch Formen eines Schlickers aus Wasser und oxidischem Keramikpulver herzustellen, wobei durch Zugabe von Salzen und Einstellen des pH-Wertes des Systems die Doppelschicht der geladenen Pulverteilchen komprimiert und der Schlicker zur Koagulation gebracht wird. Dabei wird die Viskosität des Schlickers erhöht. Die Komprimierung der Doppelschicht wird nachteiligerweise jedoch nicht zeitlich verzögert bewirkt.

Ausgehend von dem bekannten Schlickerguss und den ihm anhaftenden Nachteilen haben sich die Erfinder die Aufgabe gestellt, das Schlickerguss-Verfahren soweit weiterzuentwickeln, dass die bekannten Nachteile vermieden werden. Die Aufgabe wird erfindungsgemäss mit den kennzeichnenden Merkmalen des Patentanspruches 1 gelöst.

Bevorzugte Ausführungsformen des erfindungsgemässen Verfahrens sind in den auf den Anspruch 1 rückbezogenen Ansprüchen dargestellt.

Mit dem erfindungsgemässen Verfahren ist eine technisch einfache und in ihrer Durchführung schnelle und somit kostengünstige Alternative zu den bekannten Formgebungsverfahren geschaffen. Insbesondere bezüglich der Schlickerguss-Technik wurden Verbesserungen insofern erreicht, als geometrisch anspruchsvoller gestaltete Grünkörper als bisan möglich geformt werden können, welche bezüglich ihrer Gefüge, Oberflächenbeschaffenheiten und ihrer mechanischen Kennwerte alle an sie zu stellen den Anforderungen erfüllen. Da der Aushärtemechanismus bei dem erfindungsgemässen Schlickergussverfahren nicht mehr primär vom Wasserentzug abhängt, sind Migration und ungleiche Verteilung löslicher Bestandteile weitgehend unterdrückt. Der nach der Erfindung ablaufende Formgebungsprozess ist bedeutend schneller als der bekannte, auch ist die Entwicklung von Dichte-Gradienten vermeidbar. Im Gegensatz zu den nach dem Stand der Schlickergusstechnik hergestellten Grünkörpern sind nach dem erfindungsgemässen Verfahren gefertigte Grünkörper bei entsprechender Schlickerzusammensetzung zur Grünbearbeitung, beispielsweise zu einer mechanischen Nachbearbeitung durch Drehen, Bohren, Fräsen oder Schleifen geeignet. Die Verwendung poröser Formen kann entfallen, sie werden erfindungsgemäss durch Formen aus nichtporösen Werkstoffen (Metalle, Kunststoffe) ersetzt, somit wird die aufwendige Trocknung vor jeder Wiederverwendung vermieden.

Zur Lösung der erfindungsgemässen Aufgabenstellung geht die Erfindung davon aus, dass oxidische oder mit einer Oxidschicht überzogene, ansonsten aber nichtoxidische Pulverteilchen wie kommerziell erhältlich in Wasser verschiedene Oberflächenreaktionen eingehen, deren Art oder Typ vom pH-Wert (potentialbestimmende Ionen: H+ und OH-) des Wassers abhängt. Es resultiert eine Aufladung der Pulverteilchen, die für den sauren Bereich positiv, für den basischen Bereich negativ ist.

Die elektrostatische Aufladung der Pulverteilchen und der Potentialverlauf an der Grenzfläche Teilchenoberfläche/Wasser, im sauren wie im basischen Bereich, bestimmen die Viskosität eines Schlickers. Je höher der Absolutbetrag des Oberflächen-Potentials ist, desto niedriger die Viskosität und umso besser die Giessbarkeit des Schlickers. Minimale Viskosität ist ausserdem gewährleistet, wenn möglichst wenige und möglichst niedrig geladene Ionen in der Lösung vorliegen (möglichst niedrige Leitfähigkeit bzw. niedrige Ionenstärke), da diese einen schnelleren Abfall des elektrostatischen Potentials bei Entfernung von der Teilchenoberfläche bewirken.

Zur Verfestigung eines erfindungsgemäss aufbereiteten Schlickers stellt die hier beschriebene Erfindung auf die Verringerung der abstossenden Kräfte zwischen Pulverteilchen durch die Kompression der in der Umgebung der Teilchenoberflächen befindlichen Doppelschicht ab. Unter Doppelschicht wird eine ein Teilchen (oxidisches, nicht oxidisches mit oxidischer Umhüllung) umhüllende Ionenschicht verstanden, die aus elektrisch geladenen Co-Ionen und Gegenionen besteht. Ihre Dicke wird durch die Höhe des Oberflächenpotentials eines Teilchens und der Konzentration der das Teilchen umgebenden Co- und Gegenionen bestimmt. Unter Kompression versteht man ferner die Verringerung der Doppelschichtdicke. Diese Kompression wird beispielsweise über eine Erhöhung der Konzentration ionischer Verbindungen (Salze) im Schlicker erreicht. Die abstossenden Kräfte zwischen den Pulverteilchen nehmen dadurch stark ab.

Aus der Ueberlagerung von anziehenden und abstossenden Kräften resultiert mit zunehmender Menge an ionischen Verbindungen im Schlicker eine gesamthafte Anziehung der Teilchen und damit eine Verfestigung des Schlicker-Systems.

Der Abbau der abstossenden Kräfte kann durch separate Zugabe - d.h. Zumischung - geladener Ionen in das Schlickersystem von aussen - während oder nach dessen Verguss in eine Form - erfolgen. Diese Ver fahrensführung kann innert kurzer Zeit zur Verfestigung des kolloidalen Systems führen und wäre damit im Sinne einer Formgebung für kompliziert geformte Bauteile geeignet, wenn ein Formgebungsvorgang innerhalb kurzer Zeit zum Abschluss gebracht werden kann. Zur Fortbildung, d.h. zur Ausdehnung des Verfestigungszeitraumes, wird gemäss der Erfindung vorgeschlagen, dem Schlicker bei seiner Herstellung und vor seinem Verguss einen Wirkstoff oder eine Wirkstoffkombination beizugeben, welche sich zersetzt und dabei Ionen bildet, die den Zustand des Schlickers (auch durch Kompression der Doppelschichtdicke) bis zu dessen Verfestigung zeitlich verzögert verändert. Zur Anwendung kommen bevorzugt Wirkstoffe oder Wirkstoffkombinationen - auch Substrate genannt -, die sich im Schlicker selbst zersetzen, wobei die anfallenden Zersetzungsprodukte die Leitfähigkeit bzw. die Ionenstärke des Schlickers so weit erhöhen, dass der Schlicker sich, gegebenenfalls auch unter Mitwirkung eines Katalysatores verfestigt, d.h. intern coaguliert. Der Abbau der abstossenden Kräfte durch Zugabe geladener Ionen oder deren Bildung als Zersetzungsprodukt kann erfindungsgemäss sowohl im sauren wie im neutralen oder basischen pH-Bereich des Schlickers erfolgen. Eine die Verfestigung unterstützende pH-Wert-Verschiebung in Richtung des isoelektrischen Punktes ist hierbei nicht erforderlich, grundsätzlich aber erfindungsgemäss möglich und zur Verstärkung der Koagulierung anwendbar.

Als Wirkstoffe kommen gemäss der Erfindung primär Wirkstoffe in Form organischer Moleküle in Betracht.

Als zweckmässig haben sich organische Moleküle in Form von Harnstoff, Carbonsäureester, beispielsweise Ester der Essigsäure, Säureamide, Säurenitrile, abbaubare Kohlenhydrate, Ester des Glycerins, Phosphorsäureester, Schwefel säureester sowie Brenzkatechin und dessen Derivate erwiesen.

Denkbar sind aber auch anorganische Kationen oder Anionen (z.B. Ca oder Mg), die durch langsame Auflösung schwerlöslicher Verbindungen (z.B. Ca(OH)2 oder Mg(OH)2), bei gleichzeitiger Veränderung des pH-Wertes, gebildet werden.

Soll einem Schlicker eine Mischung aus einem Enzym und einem anorganischen und/oder organischen Substrat oben erwähnter Art zugemischt werden, so sind als Enzyme Hydrolasen (z.B. Urease, Carboxylesterase, Acetylesterase), Lipasen, Phosphorasen, Sulfatasen und Oxidasen (z.B. Glucoseoxidase oder Catecholoxidase), erfindungsgemäss bevorzugt.

Bei dieser Ausführungsform des erfindungsgemässen Verfahrens sind die Enzyme dazu bestimmt, die Wirkstoffe je nach ihrer Art zu Anionen oder Kationen und evtl. zu einem Restmolekül umzuwandeln.

Ist eine Selbstzersetzung der Wirkstoffe im Schlicker - also ohne Hilfe von Enzymen als Zersetzern - erwünscht, so haben sich dazu Wirkstoffe wie beispielsweise Glycerintriester, Glycerindiester, z.B. Glycerindiacetat oder Gluconsäurelacton als besonders zweckmässig erwiesen.

Im Folgenden wird die Erfindung an Hand der Beispiele näher dargestellt:

### Beispiel 1

Ein basischer Giesschlicker wurde durch Zugabe von 1180 g Aluminiumoxid-Pulver (CL 370 C; Alcoa, BRD) zu einer Lösung von 1,76 g Tiron und 3,54 g Harnstoff in 109 g deionisiertem Wasser hergestellt. Nach intensiver Hochgeschwindigkeits-Dispergierung wies der dünnflüssige Schlicker einen pH-Wert von 8 - 9 auf. Der anschliessend unter Vakuum entgaste Schlicker hatte zu diesem Zeitpunkt typischerweise eine Viskosität von 500 - 1000 mPas. Zu diesem aufbereiteten Schlicker wurden zwecks Erhöhung des Salzgehaltes in der Suspension und damit einhergehend zwecks Verminderung der Stabilität des Schlickers 3000 - 4000 Units Urease (EC 3.5.1.5) in Form einer wässrigen Lösung mit 2000 Units/ml Urease zugegeben. Nach Homogenisierung des nun giessbereiten Schlickers erfolgte der Abguss in Kunststoff- oder Metallformen. Je nach Reaktionsbedingungen verfestigte sich der Schlicker nach 15 - 60 Minuten. Zusätzliches Trocknen erhöhte die Festigkeit der erhaltenen Grünkörper. Die Entformung erfolgte entweder direkt nach der beendeten Verfestigung im feuchten Zustand oder nach wenigen Stunden Vortrocknung im angetrockneten Zustand. Die getrockneten Grünkörper sind durch hohe Gründichten von bis zu 75 Vol. % und gutes Sinterverhalten charakterisiert. Unter der Gründichte (in Vol. % bezogen auf das Bauteilvolumen) wird der Volumenanteil Feststoff des Bauteiles verstanden, der zusammen mit dem Porenvolumen das gesamte Bauteilvolumen (100%) ergibt.

Wahlweise kann die Enzymzugabe (10'000 - 20'000 Units Urease) auch zeitgleich mit dem Abguss (z.B. in einer Spritzgusseinheit) erfolgen. Die Verfestigung des Schlickers tritt dann bereits innert weniger Minuten ein.

### Beispiel 2

Ein basischer Giessschlicker mit pH 10 - 10.5 wurde durch Zugabe von 315 g Siliciumcarbid-Pulver (FCP 10 NLC; Norton, Norwegen), 4,7 g Graphit (KS 6, Lonza) und 1,6 g Bor (Starck) zu einer Lösung von 1.5 g Harnstoff und 0,3 g KOH in 50.8 g deionisiertem Wasser hergestellt. Nach Desagglomerierung und Entgasen besass der aufbereitete Schlicker typischerweise eine Viskosität von 100 - 200 mPas. Zu diesem giessfertigen Schlicker wurden 1000 - 1500 Units Urease (EC 3.5.1.5) in Form einer wässrigen Lösung mit 2000 Units/ml Urease gegeben. Nach Abgiessen in Metall- oder Kunststoff-Formen erfolgte die Verfestigung durch Erhöhung des Salzgehaltes und damit der Ionenstärke im Schlicker innerhalb von 15 - 30 Minuten. Die getrockneten Grünkörper haben Gründichten von 66 - 68 %.

### Beispiel 3

Ein basischer Giessschlicker mit pH 11 wurde durch Zugabe von 342 g Siliciumcarbid-Pulver (FCP 07 NC; Norton, Norwegen) zu einer Lösung von 1,5 g Butylamin in 50 g deionisiertem Wasser hergestellt. Nach Desagglomerierung und Entgasen besass der aufbereitete Schlicker typischerweise eine Viskosität von 1000 - 1500 mPas. Zu diesem giessfertigen Schlicker wurden 1,9 g Triacetin zugegeben, was mit einer deutlichen Verminderung der Viskosität einhergeht. Nach Abgiessen in Metall- oder Kunststoff-Formen erfolgte die Verfestigung aufgrund der Eigenhydrolyse des Triacetins und der damit einhergehenden Erhöhung der Salzkonzentration sowie der Verschiebung des pH-Wertes bis ca. pH 8 innerhalb von 10 - 20 Minuten. Eine beschleunigte Verfestigung kann durch Zugabe von Lipase (EC 3.1.1.3) erreicht werden. Die getrockneten Grünkörper erreichen Gründichten von 67 - 68 %.

### Beispiel 4

Ein basischer Giessschlicker mit pH 11 - 12 wurde durch Zugabe von 900 g Siliciumnitrid (LC 10N, Fa. Starck, BRD) zu einer Lösung von 5,0 g Isopentylamin in 200 ml deionisiertem Wasser hergestellt. Nach Zugabe von 10,0 g Triacetin besass der entgaste Schlicker eine Viskosität von 500 - 1000 mPas. Nach Abgiessen in Metall- oder Kunststoff-Formen erfolgte der Verfestigung aufgrund der Eigenhydrolyse des Triacetins innerhalb von 15 - 30 Minuten. Die getrockneten Grünkörper erreichen Gründichten von 57 - 58 %.

### Beispiel 5

Ein basischer Giessschlicker mit pH 8,5 -9 wurde durch Zugabe von 200 g Siliciumcarbid (FCP 07 NC, Norton, Norwegen) zu einer Lösung von 1,0 g Essigsäureethylester und 0,5 g Triethanolamin in 33 ml deionisiertem Wasser hergestellt. Der entgaste Schlicker hatte eine Viskosität von 100 - 200 mPas. Nach Zugabe von 500 Units Carboxylesterase (EC 3.1.1.1) und Abguss in Metall- oder Kunststoff-Formen erfolgte die Verfestigung durch gleichzeitige Erhöhung der Salzkonzentration und Verschiebung des pH-Wertes in Richtung isoelektrischer Punkt in 30 - 60 Minuten. Die getrockneten Grünkörper zeichnen sich durch Gründichten von 65 - 67 % aus.

### Beispiel 6

Ein basischer Giessschlicker mit pH 9 - 10 wurde durch Zugabe von 300 g Siliciumcarbid (FCP 10 NLC, Norton, Norwegen) zu einer Lösung von 1,5 g Essigsäureethylester und 0,4 g Isobutylamin sowie 0,15 g Magnesiumhydroxid in 33 ml Wasser hergestellt. Der entgaste Schlicker hatte typischerweise eine Viskosität von 1000 - 1500 mPas. Nach Zugabe von 1000 Units Carboxylesterase (EC 3.1.1.1) und Abguss in Metall- oder Kunststoff-Formen erfolgte die Verfestigung primär durch die mit der pH-Verschiebung von 10 nach 7 - 8 einsetzende Auflösung von Magnesiumhydroxid und der damit einhergehenden Bildung von Mg2+ - Ionen. Die Verfestigung trat nach 30 - 60 Minuten ein. Die getrockneten Grünkörper weisen Gründichten von 65 - 67 % auf.

### Beispiel 7

Ein saurer Giessschlicker wurde durch Zugabe von 400 g Aluminiumoxid-Pulver (HPA 0.5 mit 0,05 Gew. % MgO; Ceralox Corporation, USA) zu einer Lösung von 1,05 g konz. Salzsäure und 0,05 g Diphenylphosphat in 72,7 g deionisiertem Wasser hergestellt. Der durch Ultraschallbehandlung desagglomerierte Schlicker wies bei einen pH von 4 - 5 eine Viskosität von 100 - 300 mPas auf.

Zu diesem Schlicker wurden zwecks interner Erzeugung hochgeladener Phosphat-Anionen 100 Units 3-Phytase (EC 3.1.3.8) oder 100 Units Phosphodiesterase (EC 3.1.4.1) in Form einer wässrigen Lösung zugegeben. Nach Homogenisierung des giessbereiten Schlickers erfolgte der Abguss in Metall- oder Kunststoff-Formen. Der Schlicker verfestigte sich je nach Reaktionsbedingungen in 30 Minuten bis 3 Stunden. Die getrockneten Grünkörper haben Gründichten von 58 - 62 %.

### Beispiel 8

Ein saurer Giessschlicker wurde durch Zugabe von 440 g Aluminiumoxid-Pulver (HPA 0.5 mit 0.05 Gew. % MgO; Ceralox Corporation; USA) zu einer Lösung von 1,1 g konz. Salzsäure und 0,2 g Phenolsulfat in 80,0 g deionisiertem Wasser hergestellt. Der aufbereitete Schlicker hatte bei einem pH von 4 - 5 eine Viskosität von 100 - 300 mPas.

Zu diesem Schlicker wurden zwecks interner Erzeugung hochgeladener Sulfat-Anionen 200 Units Arylsulfatase (EC 3.1.6.1) in Form einer wässrigen Lösung zugegeben. Nach Homogenisierung des Schlickers und Abguss in Metall- oder Kunststoff-Formen erfolgte die Verfestigung in 1 - 3 Stunden. Die getrockneten Grünkörper hatten Gründichten von 58 - 62 %.

Die Beispiele stellen auf Al2O3, SiC und Si3N4 als keramische Materialien ab. Darauf ist die Erfindung jedoch nicht beschränkt. Sie ist auch auf alle anderen Arten von Keramiken, wie ZrO2 (TZP, PSZ, FSZ), SiC, Si3N4, BaTiO3, TiO2, Mullit, MgO, Kaolin, B4C, TiB2, BN, SiO2, wie auch mit sogenannten Composites, wie beispielsweise faserverstärkten Keramiken wie Al2O3/SiC, SiC/C oder partikelverstärkten Keramiken wie Al2O3/ZrO2 (ZTA) und Al2O3/TiB2 anwendbar.

Ebenfalls ist die Erfindung nicht beschränkt auf die Verfestigung von in Formen abgegossenen Schlickern, sondern ist auch anwendbar auf frei geformte Artikel, so z.B. auf Sprühgranulat, welches durch Verdüsung eines Schlickers erzeugt wurde. Weiterhin ist es anwendbar auf Artikel, welche flach auf eine ebene Unterlage ohne Verwendung einer Form gegossen werden. Folien, welche in gebrannter Form wie z.B. keramische Träger von Halbleiterbauelementen zur Anwendung kommen oder Dünn- und Dickschichten, wie sie als abrasionsfeste Schichten auf Gläser und anderen Unterlagen zur Anwendung kommen, sind ebenfalls herstellbar.

## Patentansprüche

1. Verfahren zur Herstellung von keramischen Grünkörpern aus viskosen Schlickern, bestehend aus Wasser und oxidischen und/oder mit einer Oxidschicht überzogenen nicht oxidischen keramischen geladenen Pulverteilchen, dadurch gekennzeichnet, dass zur Erhöhung der Viskosität dem Schlicker ein sich unter Ionenbildung zersetzender, die Verfestigung des Schlickers zeitlich verzögernder, die Doppelschichtdicke der Pulverteilchen komprimierender Wirkstoff beigegeben wird.

2. Verfahren nach Anspruch 1, dadurch gekennzeichnet, dass dem Schlicker Wirkstoffe in Form organischer Moleküle beigegeben werden.

3. Verfahren nach Anspruch 1, dadurch gekennzeichnet, dass dem Schlicker als Wirkstoff anorganische Kationen oder Anionen zugeführt werden.

4. Verfahren nach Anspruch 2, dadurch gekennzeichnet, dass dem Schlicker als organische Moleküle Harnstoff oder Carbonsäureester (beispielsweise Ester der Essigsäure) oder Säureamide oder Säurenitrile oder abbaubare Kohlehydrate oder Ester des Glycerins oder Phosporsäureester oder Schwefelsäureester oder Brenzkatechin und dessen Derivate beigegeben werden.

5. Verfahren nach Anspruch 3, dadurch gekennzeichnet, dass dem Schlicker als anorganische Kationen z.B. Kalzium (Ca) oder Magnesium (Mg) in Form von im basischen pH Bereich des Schlickers schwerlöslichen Verbindungen (z.B. Hydroxide oder Carbonate) zugegeben werden, wobei vermittels Zugabe von pH Werte in Richtung sauer verschiebenden Wirkstoffen die Auflösung der Kationen vorgenommen wird.

6. Verfahren nach Anspruch 2, dadurch gekennzeichnet, dass einem organischen Wirkstoff als Zersetzungshilfe ein katalytisch wirkendes Enzym zugemischt wird.

7. Verfahren nach Anspruch 6, dadurch gekennzeichnet, dass dem Wirkstoff als Enzym, z.B. Hydrolasen (beispielsweise Urease, Carboxylesterase, Acetylesterase) oder Lipasen, oder Phosphorasen, oder Sulfatasen, oder Oxidasen (beispielsweise Glucoseoxidase, Catecholoxidase) zugemischt wird.

8. Verfahren nach Anspruch 5, dadurch gekennzeichnet, dass als selbstzersetzende den pH Wert in Richtung sauer verschiebende Wirkstoffe Glycerintriester oder Glycerindiester, z.B. Glycerindiacetat oder Gluconsäurelacton dem Schlicker beigefügt werden.

## Claims

1. A process for the production of ceramic green bodies from viscous slip, comprising water and oxidic and/or non-oxidic ceramic charged particles, said non-oxidic particles coated with an oxide layer, characterised thereby that for increase of the viscosity an active substance is added to the slip, said substance upon decomposition forming ions, timely delaying solidification of the slips and compressing the double layer thickness of the powder particles.

2. A process according to claim 1 characterised thereby that substances in the form of organic molecules are added to the slip.

3. A process according to claim 1 characterised thereby that inorganic cations or anions are added to the slip as a substance.

4. A process according to claim 2 characterised thereby that as organic molecules urea or carboxylic esters (for instance ester of acetic acid), or acid amides or acid nitriles or decomposable carbohydrates or ester of glycerines or phosphoric acid esters, or sulfuric acid esters or brenzkatechine and derivatives thereof are added to the slip.

5. A process according to claim 3 characterised thereby that as inorganic cations for instance calcium (Ca) or magnesium (Mg) in form in the basic range of the slip difficult to dissolve compounds (for instance hydroxides or carbonates) are added to the slip whereby by addition of compounds moving pH values in the direction of acidic the dissolution of the cations is effected.

6. A process according to claim 2 characterised thereby that to an inorganic compound is added a catalytic acting enzyme as decomposition aid.

7. A process according to claim 6 characterised thereby that there is added to the compound as an enzyme for instance hydrolases (for instance urease, carboxylesterase, acetylesterase) or lipases, or phosphorases, or sulfatases or oxidases (for instance glucose oxidase, catechol oxidase).

8. A process according to claim 5 characterised thereby that as self decomposable, the pH towards acidic shifting substances glycerine triesters or glycerine diesters for instance glycerine diacetate or gluconic acid lactones are added to the slip.

## Revendications

1. Procédé de fabrication de produits verts de céramique à partir de barbotines visqueuses, constituées d'eau et de petites particules de poudre céramique oxydées et/ou non oxydées et revêtues d'une couche d'oxyde, caractérisé en ce que pour augmenter la viscosité on ajoute à la barbotine un agent se décomposant sous l'effet d'une liaison ionique, différant dans le temps le durcissement de la barbotine, comprimant l'épaisseur de la double couche des particules de poudre.

2. Procédé selon la revendication 1, caractérisé en ce que des agents sont ajoutés à la barbotine sous forme de molécules organiques.

3. Procédé selon la revendication 1, caractérisé en ce que l'agent ajouté à la barbotine consiste en des cations ou des anions inorganiques.

4. Procédé selon la revendication 2, caractérisé en ce que les molécules organiques ajoutées à la barbotine sont de la carbamide ou des esters d'acide carbonique (par exemple des esters d'acide acétique) ou des amides d'acide ou des nitriles d'acide ou des hydrates de carbone dégradables ou des esters de glycérol ou des esters d'acide phosphorique ou des esters d'acide sulfurique ou de la pyrocatéchine et leurs dérivés.

5. Procédé selon la revendication 3, caractérisé en ce que les cations inorganiques ajoutés à la barbotine sont par exemple du calcium (Ca) ou du magnésium (Mg) sous forme de liaisons difficilement solubles (par exemple des hydroxydes ou des carbonates) dans la plage de valeurs basiques du pH de la barbotine, la dissolution des cations étant effectuée au moyen d'ajout d'agents décalant le pH vers des valeurs acides.

6. Procédé selon la revendication 2, caractérisé en ce qu'un enzyme à effet catalytique est mélangé à un agent organique en tant qu'adjuvant de décomposition.

7. Procédé selon la revendication 6, caractérisé en ce que sont mélangés à l'agent en tant qu'enzyme par exemple des hydrolases (par exemple des uréases, des estérases carboxyliques, des estérases d'acétyle) ou des lipases ou des phosphorases ou des sulfatases ou des oxydases (par exemple des oxydases de glucose, des oxydases de pyrocatéchine).

8. Procédé selon la revendication 5, caractérisé en ce que sont ajoutés à la barbotine en tant qu'agents à décomposition spontanée décalant le pH vers des valeurs acides, des triesters de glycérol ou des diesters de glycérol, par exemple du diacétate de glycérol ou du lactone d'acide gluconique.
